# EUROPEAN PATENT APPLICATION

(11) **EP 4 625 569 A1**
(43) Date of publication of application: **01.10.2025**
(21) Application number: 23894335.1
(22) Date of filing: 24.10.2023
(51) Int. Cl.: H01M 10/052, H01M 4/13, H01M 4/64, H01M 50/414, H01M 50/443, H01M 50/449, H01M 50/451, H01M 50/463

(54) **SECONDARY BATTERY**

(30) Priority: 22.11.2022 JP 2022186350
(71) Applicant: Panasonic Intellectual Property Management Co., Ltd., Kadoma-shi, Osaka 571-0057 (JP)
(72) Inventor: KUSUMOTO, Shohei, Kadoma-shi, Osaka 571-0057 (JP); KATO, Keiko, Kadoma-shi, Osaka 571-0057 (JP); IWAMOTO,Takuya, Kadoma-shi, Osaka 571-0057 (JP); NISHINO, Hajime, Kadoma-shi, Osaka 571-0057 (JP)
(74) Representative: Eisenführ Speiser
(86) International application number: PCT/JP2023/038341
(87) International publication number: WO 2024/111323

(57) **Abstract**

A secondary battery according to the present disclosure comprises a positive electrode (11), a negative electrode (12) and a separator (13) that is provided between the positive electrode (11) and the negative electrode (12); the positive electrode (11) comprises a positive electrode collector and a positive electrode mixture layer that is disposed on the positive electrode collector; the negative electrode (12) comprises a negative electrode collector and a negative electrode mixture layer that is disposed on the negative electrode collector; the negative electrode mixture layer contains a negative electrode active material that contains an Si-containing material; at least one of the positive electrode collector and the negative electrode collector has a 1% elongation proof stress of 190 MPa or more; and at least one of a first separator surface (13a) and a second separator surface (13b) of the separator (13) has a ten-point average roughness (Rz) of 2.7 µm or more.

## Description

### TECHNICAL FIELD

The present disclosure relates to a secondary battery.

### BACKGROUND

In recent years, as a secondary battery having high output and high energy density, a secondary battery such as a lithium ion secondary battery including an electrode assembly in which a positive electrode and a negative electrode are arranged to face each other with a separator interposed therebetween has been widely used.

Secondary batteries such as lithium ion secondary batteries are used as power sources for a wide range of devices including electric vehicles, and further increase in capacity is required. For example, Patent Literature 1 discloses that a Si-containing material is used as a negative electrode active material in order to increase the capacity of a secondary battery.

### CITATION LIST

### PATENT LITERATURE

Patent Literature 1: WO 2016-035290 A

### SUMMARY

By the way, since the Si-containing material largely changes in volume (expansion/contraction) during charging and discharging, current collectors used for a positive electrode and a negative electrode elongate, and the widths of the electrodes have to be reduced in order to secure reliability, and the capacity decreases. Therefore, it is possible to suppress the elongation of the current collectors by increasing the strength of the current collectors for both of the positive electrode and the negative electrode or the strength of the current collector for any one of the positive electrode and the negative electrode. However, on the other hand, an electrode assembly including the positive electrode and the negative electrode is less likely to change in volume (for example, it is difficult to elongate in a vertical direction, a horizontal direction, or a radial direction), so that the circulation of an electrolyte solution to the inside of the electrode assembly degrades, which causes a problem that charge-discharge cycle characteristics degrade.

Therefore, an object of the present disclosure is to suppress elongation of a current collector and to suppress degradation of charge-discharge cycle characteristics in a secondary battery using a Si-containing material as a negative electrode active material.

A secondary battery according to the present disclosure includes an electrode assembly including a positive electrode, a negative electrode, and a separator provided between the positive electrode and the negative electrode, in which the positive electrode includes a positive electrode current collector and a positive electrode mixture layer disposed on the positive electrode current collector, the negative electrode includes a negative electrode current collector and a negative electrode mixture layer disposed on the negative electrode current collector, the negative electrode mixture layer contains a negative electrode active material containing a Si-containing material, at least one of the positive electrode current collector and the negative electrode current collector has a 1% elongation proof stress greater than or equal to 190 MPa, the separator has a first separator surface facing the positive electrode and a second separator surface facing the negative electrode, and at least one of the first separator surface and the second separator surface has a ten-point average roughness (Rz) greater than or equal to 2.7 µm.

According to the present disclosure, in a secondary battery using a Si-containing material as a negative electrode active material, it is possible to suppress elongation of a current collector and to suppress degradation of charge-discharge cycle characteristics.

### BRIEF DESCRIPTION OF DRAWINGS

FIG. 1 is a sectional view of a secondary battery according to an example of an embodiment.
FIG. 2 is a schematic diagram showing a state in which a separator is disposed between a positive electrode and a negative electrode.
FIG. 3 is a schematic sectional view showing an example of the separator according to the present embodiment.

### DESCRIPTION OF EMBODIMENTS

A secondary battery according to an aspect of the present disclosure includes an electrode assembly including a positive electrode, a negative electrode, and a separator provided between the positive electrode and the negative electrode, in which the positive electrode includes a positive electrode current collector and a positive electrode mixture layer disposed on the positive electrode current collector, the negative electrode includes a negative electrode current collector and a negative electrode mixture layer disposed on the negative electrode current collector, the negative electrode mixture layer contains a negative electrode active material containing a Si-containing material, at least one of the positive electrode current collector and the negative electrode current collector has a 1% elongation proof stress greater than or equal to 190 MPa, the separator has a first separator surface facing the positive electrode and a second separator surface facing the negative electrode, and at least one of the first separator surface and the second separator surface has a ten-point average roughness (Rz) greater than or equal to 2.7 µm. According to the secondary battery according to the aspect of the present disclosure, it is possible to suppress the elongation of the current collectors and to suppress the degradation of charge-discharge cycle characteristics. Although a mechanism that exerts the above effects is not clear, the following is conceivable.

Even when the Si-containing material expands and contracts during charging and discharging of the battery, at least one of the positive electrode current collector and the negative electrode current collector has a 1% elongation proof stress greater than or equal to 190 MPa, so that the elongation of the current collector on the positive electrode side or the negative electrode side or the current collectors on both of the current collectors is suppressed. **In** addition, since a surface of the separator provided between the positive electrode and the negative electrode has a ten-point average roughness (Rz) greater than or equal to 2.7 µm, an appropriate gap is formed between the positive electrode and the separator or between the negative electrode and the separator, or both between the positive electrode and the separator and between the negative electrode and the separator. Therefore, even when the current collector having a high 1% elongation proof stress is used and a change in the volume of the electrode assembly during charging or discharging of the battery becomes small (for example, it is difficult to elongate in a vertical direction, a horizontal direction, or a radial direction), the degradation of circulating an electrolyte solution to the electrode assembly is suppressed, and the degradation of the charge-discharge cycle characteristics is suppressed.

An example of an embodiment of a secondary battery according to the present disclosure will be described below in detail.

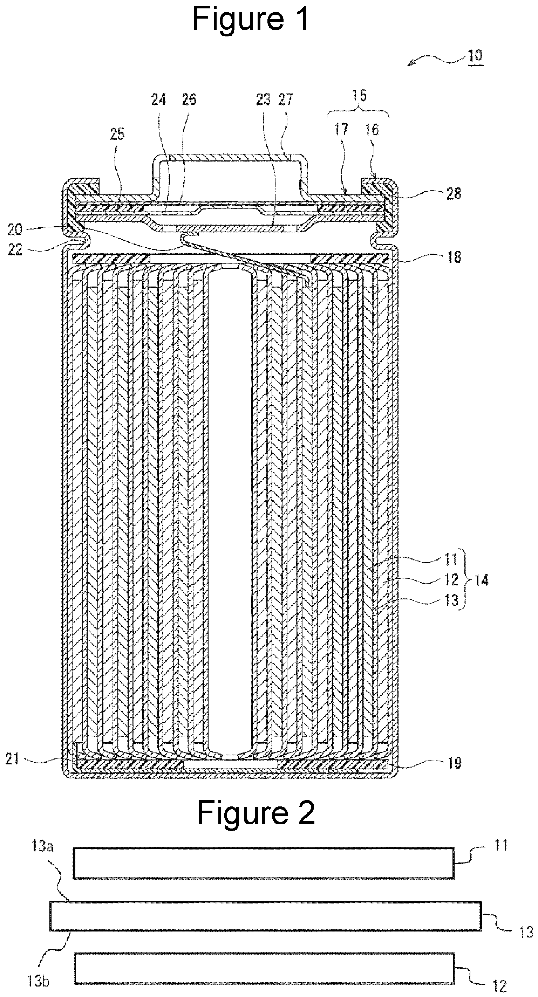

FIG. 1 is a sectional view of a secondary battery of an example of an embodiment. The secondary battery 10 shown in FIG. 1 includes a wound electrode assembly 14 in which a positive electrode 11 and a negative electrode 12 are wound with a separator 13 interposed between the positive electrode 11 and the negative electrode 12, a non-aqueous electrolyte, insulating plates 18 and 19 disposed on the upper and lower sides of the electrode assembly 14 respectively, and a battery case 15 housing the above-described members. The battery case 15 includes a bottomed cylindrical case body 16 and a sealing assembly 17 that seals an opening of the case body 16. Note that, instead of the wound electrode assembly 14, an electrode assembly having another form, such as a stacked electrode assembly in which positive electrodes and negative electrodes are alternately stacked with separators interposed between the positive electrodes and the negative electrodes, may be applied. Furthermore, examples of the battery case 15 include metal cases having a cylindrical shape, a square shape, a coin shape, a button shape, or the like, and resin cases formed by laminating resin sheets (so-called laminate type).

The non-aqueous electrolyte has, for example, ion conductivity (for example, lithium ion conductivity). The non-aqueous electrolyte may be a liquid electrolyte (electrolytic solution) or a solid electrolyte.

The liquid electrolyte (electrolytic solution) contains, for example, a non-aqueous solvent and an electrolyte salt dissolved in the non-aqueous solvent. Examples of the non-aqueous solvent include esters, ethers, nitriles, amides, and mixed solvents of two or more thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate or the like) in which at least a part of hydrogen in these solvents is substituted with a halogen atom such as fluorine. As the electrolyte salt, for example, a lithium salt such as LiPF₆ is used.

As the solid electrolyte, for example, a solid or gel polymer electrolyte, an inorganic solid electrolyte, or the like can be used. The polymer electrolyte contains, for example, a lithium salt and a matrix polymer or contains, for example, a non-aqueous solvent, a lithium salt, and a matrix polymer. As the matrix polymer, for example, a polymer material that absorbs a non-aqueous solvent and gelates is used. Examples of the polymer material include a fluororesin, an acrylic resin, and a polyether resin. As the inorganic solid electrolyte, for example, a material known for all-solid-state lithium ion secondary batteries and the like (for example, an oxide-based solid electrolyte, a sulfide-based solid electrolyte, a halogen-based solid electrolyte, or the like) can be used. The non-aqueous electrolyte is an example, and may be an aqueous electrolyte as long as it is applicable.

The case body 16 is, for example, a bottomed cylindrical metal container. A gasket 28 is provided between the case body 16 and the sealing assembly 17 to ensure airtightness inside the battery. The case body 16 has a projecting portion 22 in which, for example, a part of a side surface portion of the case body 16 projects inward to support the sealing assembly 17. The projecting portion 22 is preferably formed in an annular shape along the circumferential direction of the case body 16, and supports the sealing assembly 17 on its upper surface.

The sealing assembly 17 has a structure in which a filter 23, a lower vent member 24, an insulating member 25, an upper vent member 26, and a cap 27 are sequentially stacked from the electrode assembly 14 side. Each member constituting the sealing assembly 17 has, for example, a disk shape or a ring shape, and the members excluding the insulating member 25 are electrically connected to each other. The lower vent member 24 and the upper vent member 26 are connected to each other at their central portions, and the insulating member 25 is interposed between the circumferential portions of the lower vent member 24 and the upper vent member 26. When the internal pressure of the secondary battery 10 increases due to heat generated by an internal short circuit or the like, for example, the lower vent member 24 deforms so as to push the upper vent member 26 up toward the cap 27 side and breaks, and thus a current pathway between the lower vent member 24 and the upper vent member 26 is interrupted. When the internal pressure further increases, the upper vent member 26 breaks, and gas is discharged from an opening of the cap 27.

In the secondary battery 10 shown in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to a lower surface of the filter 23, which is a bottom plate of the sealing assembly 17, by welding or the like, and the cap 27, which is electrically connected to the filter 23 and is a top plate of the sealing assembly 17, serves as a positive electrode terminal. The negative electrode lead 21 is connected to a bottom inner surface of the case body 16 by welding or the like, and the case body 16 serves as a negative electrode terminal.

The positive electrode 11, the negative electrode 12, and the separator 13 will be described below in detail.

### [Positive Electrode]

The positive electrode 11 includes a positive electrode current collector and a positive electrode mixture layer disposed on the positive electrode current collector. The positive electrode mixture layer may be disposed on one surface or both surfaces of the positive electrode current collector. As the positive electrode current collector, a foil of a metal that is aluminum or the like and is stable in a potential range of the positive electrode 11, a film in which the metal is disposed on a surface layer thereof, or the like can be used. The 1% elongation proof stress of the positive electrode current collector will be described later.

The positive electrode mixture layer contains, for example, a positive electrode active material, a binding material, and a conductive agent. The positive electrode 11 can be produced, for example, by applying a positive electrode mixture slurry containing a positive electrode active material, a binding material, a conductive agent, and the like onto a positive electrode current collector, drying the applied film, and then rolling the applied film.

Examples of the positive electrode active material include lithium transition metal oxides containing transition metal elements such as Co, Mn, and Ni. Examples of the lithium transition metal oxides include LiₓCoO₂, LiₓNiO₂, LiₓMnO₂, LiₓCo_{y}Ni_{1-y}O₂, LiₓCo_{y}M_{1-y}O_{z}, Li_{z}Ni_{1-y}M_{y}O_{z}, LiₓMn₂O₄, LiₓMn_{2-y}M_{y}O₄, LiMPO₄, and Li₂MPO₄F (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). These may be used singly, or a plurality of kinds of them may be mixed and used. From the viewpoint that a high capacity of the secondary battery can be achieved, it is desirable that the positive electrode active material contains a lithium nickel composite oxide such as LiₓNiO₂, LiₓCo_{y}Ni_{1-y}O₂, or LiₓNi_{1-y}M_{y}O_{z} (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, 2.0 ≤ z ≤ 2.3).

Examples of the conductive agent include carbon particles such as carbon black (CB), acetylene black (AB), Ketjenblack, carbon nanotube (CNT), and graphite. Among them, one type may be used alone, or two or more types may be used in combination.

Examples of the binding material include fluorine-based resins such as polytetrafluoroethylene (PTFE) and polyvinylidene fluoride (PVDF), polyacrylonitrile (PAN), polyimide-based resins, acrylic resins, polyolefin-based resins, styrene-butadiene rubber (SBR), carboxymethyl cellulose (CMC) or a salt thereof, polyacrylic acid (PAA) or a salt thereof (PAA-Na, PAA-K, or the like, and a partially neutralized salt may be used), and polyvinyl alcohol (PVA). Among them, one type may be used alone, or two or more types may be used in combination.

### [Negative Electrode]

The negative electrode 12 includes a negative electrode current collector and a negative electrode mixture layer disposed on the negative electrode current collector. The negative electrode mixture layer may be disposed on one surface or both surfaces of the negative electrode current collector. As the negative electrode current collector, a foil of a metal that is copper, a copper alloy, or the like and is stable in a potential range of the negative electrode, a film in which the metal is disposed on a surface layer thereof, or the like can be used. The 1% elongation proof stress of the negative electrode current collector will be described later.

The negative electrode mixture layer contains, for example, a negative electrode active material, a binding material, a conductive agent, and the like. The negative electrode 12 can be produced, for example, by applying a negative electrode mixture slurry containing a negative electrode active material, a binding material, and the like onto a negative electrode current collector, drying the applied film, and then rolling the applied film.

The negative electrode active material contains a Si-containing material. Examples of the Si-containing material include Si, a Si alloy, and a Si compound. In addition, the Si-containing material may be, for example, composite particles containing an ion conducting phase and a silicon phase (silicon particles from one viewpoint) dispersed in the ion conducting phase. The ion conducting phase is a phase that conducts ions, and examples of the ion conducting phase include a silicate phase, a carbon phase, and a silicon oxide phase. The Si-containing material preferably includes, for example, at least one of first composite particles containing a carbon phase and a silicon phase dispersed in the carbon phase, second composite particles containing a silicate phase and a silicon phase dispersed in the silicate phase, and third composite particles containing a silicon oxide phase and a silicon phase dispersed in the silicon oxide phase.

The carbon phase may be composed of, for example, amorphous carbon (amorphous carbon). Examples of the amorphous carbon constituting the carbon layer include hard carbon, soft carbon, and other amorphous carbon. The amorphous carbon is a carbon material in which an average spacing d₀₀₂ of (002) plane measured by an X-ray diffraction method exceeds 0.34 nm.

A main component (for example, greater than or equal to 95% by mass and less than or equal to 100% by mass) of the silicon oxide phase may be silicon dioxide. The composition of the composite particles containing the silicon oxide phase and the silicon phase dispersed in the silicon oxide phase can be represented by SiOₓ as a whole. SiOₓ has a structure in which silicon fine particles are dispersed in amorphous SiO₂. The content ratio x of oxygen to silicon preferably satisfies, for example, 0.5 ≤ x < 2.0, and more preferably satisfies, for example, 0.8 ≤ x ≤ 1.5.

The silicate phase may satisfy a condition (1) and/or a condition (2) described below.
(1) The silicate phase contains at least one selected from the group consisting of an alkali metal element and a Group 2 element (Group 2 element of the long form of the periodic table).
(2) The silicate phase contains an element L. The element L is at least one selected from the group consisting of B, Al, Zr, Nb, Ta, V, lanthanoids, Y, Ti, P, Bi, Zn, Sn, Pb, Sb, Co, Er, F, and W. The lanthanoids are a generic term for 15 elements from lanthanum (La) with atomic number 57 to lutetium (Lu) with atomic number 71.

With regard to the condition (1), examples of the alkali metal element include lithium (Li), potassium (K), and sodium (Na). Examples of the Group 2 element include magnesium (Mg), calcium (Ca), strontium (Sr), and barium (Ba). By containing the alkali metal element and/or the Group 2 element, the irreversible capacity of the silicate phase may be reduced. The silicate phase (hereinafter, it may be referred to as a "lithium silicate phase") containing lithium is preferable, for example, from the viewpoint of having a low irreversible capacity and high initial charge-discharge efficiency.

The lithium silicate phase may be an oxide phase containing Li, Si, and O, and may contain other elements. The atomic ratio O/Si of O to Si in the lithium silicate phase is, for example, greater than 2 and less than 4. Preferably, O/Si is greater than 2 and less than 3. The atomic ratio Li/Si of Li to Si in the lithium silicate phase is, for example, greater than 0 and less than 4.

The lithium silicate phase may contain a lithium silicate phase represented by a formula of Li_{2z}SiO_{(2+z)} (0 < z < 2), or may be composed of the lithium silicate phase. z preferably satisfies a relationship of 0 < z < 1, and more preferably z = 1/2 (that is, Li₂Si₂O₅).

The Si-containing material may contain composite particles containing an ion conducting phase and a silicon phase dispersed in the ion conducting phase, and a coating layer covering at least a part of the surface of the composite particles.

The coating layer present on the surface of the composite particles contains, for example, a conductive layer. By forming the conductive layer on the surface of the composite particles, the conductivity of the Si-containing material may be improved. As a conductive material constituting the conductive layer, a conductive material containing carbon is preferable. Examples of the conductive material containing carbon include a conductive carbon material. Examples of the conductive carbon material include carbon black, graphite, and amorphous carbon (amorphous carbon) having low crystallinity. The amorphous carbon is preferable in that it has a large buffering action on the silicon phase that changes in volume by charging and discharging. The amorphous carbon may be easily graphitizable carbon (soft carbon) or non-graphitizable carbon (hard carbon). Examples of the carbon black include acetylene black and Ketjenblack. The thickness of the conductive layer may be, for example, in the range of greater than or equal to 1 nm and less than or equal to 200 nm. The thickness of the conductive layer can be measured by observing a cross section of the Si-containing material using a SEM or a transmission electron microscope (TEM).

The content of the Si-containing material is preferably greater than or equal to 3% by mass with respect to the total mass of the negative electrode active material from the viewpoint of, for example, increasing the capacity of the battery. The upper limit of the content of the Si-containing material is preferably, for example, less than or equal to 20% by mass.

The negative electrode active material may contain, for example, a known material capable of reversibly storing and releasing lithium ions, in addition to the Si-containing material. The negative electrode active material preferably contains, for example, a carbon material from the viewpoint of further suppressing degradation of charge-discharge cycle characteristics of the battery. Examples of the carbon material include graphite materials such as natural graphite and artificial graphite. The content of the carbon material is preferably, for example, greater than or equal to 80% by mass with respect to the total mass of the negative electrode active material. In addition, the negative electrode active material may contain a Sn-containing material, a Ti-containing material, or the like as a known material capable of reversibly storing and releasing lithium ions.

Examples of the binding material include fluorine-based resins such as polytetrafluoroethylene (PTFE) and polyvinylidene fluoride (PVDF), polyacrylonitrile (PAN), polyimide-based resins, acryl-based resins, polyolefin-based resins, styrene-butadiene rubber (SBR), carboxymethyl cellulose (CMC) or a salt thereof, polyacrylic acid (PAA) or a salt thereof (PAA-Na, PAA-K, or the like, and a partially neutralized salt may be used), and polyvinyl alcohol (PVA). Among them, one type may be used alone, or two or more types may be used in combination.

Examples of the conductive agent include carbon particles such as carbon black (CB), acetylene black (AB), Ketjenblack, carbon nanotube (CNT), and graphite. Among them, one type may be used alone, or two or more types may be used in combination.

### [1% Elongation Proof Stress]

The 1% elongation proof stress of at least one of the positive electrode current collector and the negative electrode current collector is greater than or equal to 190 MPa from the viewpoint of suppressing the elongation of the current collector. The upper limit of the 1% elongation proof stress is, for example, preferably less than or equal to 700 MPa, and more preferably less than or equal to 550 MPa. The 1% elongation proof stress is a proof stress (1%) measured by a metal material tensile test method based on JIS Z 2241. The 1% elongation proof stress of the current collector can be adjusted by, for example, the thickness of the current collector or the crystal grain size of the material of the current collector. In the present embodiment, both the 1% elongation proof stress of the positive electrode current collector and the 1% elongation proof stress of the negative electrode current collector may be greater than or equal to 190 MPa, but for example, in consideration of the cost aspect of the battery and the like, only one of the 1% elongation proof stress of the positive electrode current collector and the 1% elongation proof stress of the negative electrode current collector is preferably greater than or equal to 190 MPa. From the viewpoint of suppressing expansion and shrinkage of the negative electrode active material, the 1% elongation proof stress of the negative electrode current collector is preferably greater than or equal to 190 MPa. The thickness of the positive electrode current collector is, for example, in the range of greater than or equal to 1 µm and less than or equal to 50 µm. The same applies to the thickness of the negative electrode current collector.

### [Separator]

FIG. 2 is a schematic diagram showing a state in which the separator is disposed between the positive electrode and the negative electrode. The positive electrode 11, the negative electrode 12, and the separator 13 shown in FIG. 2 are in a state before winding. Then, the electrode assembly 14 is formed by winding the positive electrode 11 and the negative electrode 12 with the separator 13 interposed between the positive electrode 11 and the negative electrode 12. In FIG. 2, a gap between the positive electrode 11 and the separator 13, and a gap between the negative electrode 12 and the separator 13 are exaggerated.

The separator 13 has a first separator surface 13a facing the positive electrode 11 and a second separator surface 13b facing the negative electrode 12. At least one of the first separator surface 13a and the second separator surface 13b has a ten-point average roughness (Rz) greater than or equal to 2.7 µm. The ten-point average roughness (Rz) refers to a value obtained by extracting only a reference length from a roughness curve in the direction of an average line thereof, determining the sum of the average value of the absolute values of the heights (Yp) of peaks from the highest peak to the fifth highest peak and the average value of the absolute values of the heights (Yv) of valleys from the lowest valley to the fifth lowest valley measured in the direction of the vertical magnification from the average line of the extracted portion, and representing this value in micrometers (µm). The greater the value of the ten-point average roughness (Rz), the coarser the surface of the separator as a whole. The less the value of the ten-point average roughness (Rz), the smoother the surface of the separator as a whole. For example, the surface of the separator is observed with a laser microscope (OLS4100 made by Olympus Corporation), and the ten-point average roughness (Rz) can be measured by a method in accordance with JIS B0601:2001.

In the present embodiment, both the first separator surface 13a and the second separator surface 13b may have a ten-point average roughness (Rz) greater than or equal to 2.7 µm, but for example, in consideration of the cost aspect of the battery and the like, it is preferable that only one of the first separator surface 13a and the second separator surface 13b have a ten-point average roughness (Rz) greater than or equal to 2.7 µm, and in consideration of process easiness and the like, it is more preferable that only the first separator surface 13a have a ten-point average roughness (Rz) greater than or equal to 2.7 µm.

The ten-point average roughness (Rz) of at least one of the first separator surface 13a and the second separator surface 13b is greater than or equal to 2.7 µm, preferably greater than or equal to 3 and less than or equal to 10, and more preferably greater than or equal to 3.5 and less than or equal to 8 from the viewpoint of suppressing the degradation of circulating the electrolyte solution to the electrode assembly and suppressing the degradation of the charge-discharge cycle characteristics.

An example of a configuration of the separator having a separator surface having a ten-point average roughness greater than or equal to 2.7 µm will be described below in detail.

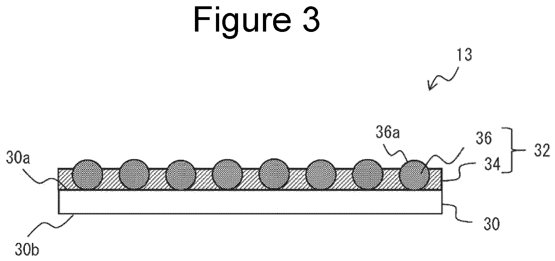

FIG. 3 is a schematic sectional view showing an example of the separator according to the present embodiment. As shown in FIG. 3, the separator 13 includes a base material 30 having a first surface 30a and a second surface 30b, and a functional layer 32 disposed on the first surface 30a of the base material 30. The functional layer 32 may be disposed on the first surface 30a and the second surface 30b.

The base material 30 is, for example, a porous sheet having ion permeability and insulating properties, and specific examples thereof include a microporous thin film, a woven fabric, and a nonwoven fabric. The material of the base material 30 is not particularly limited, and examples thereof include polyolefins such as polyethylene, polypropylene, and a copolymer of polyethylene and an α-olefin, acrylic resins, polystyrene, polyester, cellulose, polyimide, polyphenylene sulfide, polyether ether ketone, and a fluororesin.

The functional layer 32 includes a heat-resistant layer 34 containing inorganic particles and resin particles 36 dispersed in the heat-resistant layer 34. Some of the resin particles 36 form projections 36a protruding from a surface of the heat-resistant layer 34. An outer surface of the functional layer 32, that is, the surface opposite to a surface facing the base material 30 is formed by the surface of the heat-resistant layer 34 and the projections 36a protruding from the surface of the heat-resistant layer 34. The outer surface of the functional layer 32 has a ten-point average roughness (Rz) greater than or equal to 2.7 µm. For example, by increasing the average particle diameter (D50) of the resin particles 36 or increasing the amount of the resin particles 36 dispersed in the heat-resistant layer 34, the outer surface of the functional layer 32 is roughened, and the ten-point average roughness (Rz) is increased.

The outer surface of the functional layer 32 is the first separator surface 13a facing the positive electrode 11 or the second separator surface 13b facing the negative electrode 12 described above, and is preferably the first separator surface 13a facing the positive electrode 11.

The average particle diameter (D50) of the resin particles 36 is preferably greater than the average thickness of the heat-resistant layer 34 from the viewpoint of easily roughening the outer surface of the functional layer 32, and the difference between the average particle diameter (D50) of the resin particles 36 and the average thickness of the heat-resistant layer 34 is, for example, preferably greater than or equal to 0.5 µm, more preferably greater than or equal to 1.0 µm. The upper limit of the difference between the average particle diameter (D50) of the resin particles 36 and the thickness of the heat-resistant layer 34 is not particularly limited, but is preferably less than or equal to 10 µm, for example, from the viewpoint of decreasing the ion conductivity of the separator. The average particle diameter (D50) of the resin particles 36 depends on the thickness of the heat-resistant layer 34, but is preferably, for example, the range of greater than or equal to 1.0 µm and less than or equal to 8.0 µm. In the present specification, D50 means a particle diameter at which a cumulative frequency in a volume-based particle size distribution is 50% from the smallest particle size, and is also referred to as a median diameter. The particle size distribution of the resin particles 36 can be measured using a laser diffraction type particle size distribution measuring apparatus (for example, MT3000II manufactured by MicrotracBEL Corp.) using water as a dispersion medium. The average thickness of the heat-resistant layer 34 is a value obtained by cutting the separator 13 along a plane perpendicular to the surface direction of the separator 13, measuring thicknesses of the heat-resistant layer 34 at 10 or more points in a cross section of the separator 13, and averaging the measured thicknesses.

The content of the resin particles 36 is more preferably, for example, in the range of greater than or equal to 4:96 and less than or equal to 20:80 (the resin particles: the heat-resistant layer) in terms of a mass ratio of the resin particles 36 to the heat-resistant layer 34.

The area occupancy of the resin particles 36 when the surface of the functional layer 32 is viewed in plan view is preferably greater than or equal to 2% and less than or equal to 30%, and preferably greater than or equal to 5% and less than or equal to 20% from the viewpoint of roughening the outer surface of the functional layer 32. The area occupancy of the resin particles 36 can be calculated by observing the surface of the functional layer 32 with a scanning electron microscope and measuring the total area of the projections 36a present in a range of 100 µm × 100 µm.

As the resin particles 36, for example, a known polymer that can be used as a binding material during the formation of the functional layer 32 can be used. Examples of a monomer unit constituting the resin particles 36 (polymer) include an aromatic vinyl monomer unit, a (meth)acrylic acid ester monomer unit, and a fluorine-containing monomer unit. In the present disclosure, "(meth)acrylic" means acrylic and/or methacrylic. The resin particles 36 (polymer) "containing the monomer unit" means that the polymer obtained using a monomer contains repeating units derived from the monomer.

Examples of an aromatic vinyl monomer capable of forming the aromatic vinyl monomer unit are not particularly limited, and include styrene, α-methylstyrene, styrenesulfonic acid, butoxystyrene, and vinylnaphthalene. Examples of a (meth)acrylic acid ester monomer capable of forming the (meth)acrylic acid ester monomer unit include: alkyl acrylates such as methyl acrylate, ethyl acrylate, n-propyl acrylate, isopropyl acrylate, butyl acrylates such as n-butyl acrylate and t-butyl acrylate, pentyl acrylate, hexyl acrylate, heptyl acrylate, octyl acrylates such as 2-ethylhexyl acrylate, nonyl acrylate, decyl acrylate, lauryl acrylate, n-tetradecyl acrylate, and stearyl acrylate; and alkyl methacrylate such as methyl methacrylate, ethyl methacrylate, n-propyl methacrylate, isopropyl methacrylate, butyl methacrylate such as n-butyl methacrylate and t-butyl methacrylate, pentyl methacrylate, hexyl methacrylate, heptyl methacrylate, octyl methacrylate such as 2-ethylhexyl methacrylate, nonyl methacrylate, decyl methacrylate, lauryl methacrylate, n-tetradecyl methacrylate, and stearyl methacrylate.

Examples of a fluorine-containing monomer capable of forming the fluorine-containing monomer unit are not particularly limited, and include vinylidene fluoride, tetrafluoroethylene, hexafluoropropylene, vinyl trifluoride chloride, vinyl fluoride, and perfluoroalkyl vinyl ether.

The resin particles 36 may contain a crosslinkable monomer unit in addition to the above-mentioned monomer unit. Here, the crosslinkable monomer unit is a monomer capable of forming a crosslinked structure during or after polymerization by heating or irradiation with an energy ray. Examples of the monomer capable of forming the crosslinkable monomer unit include a polyfunctional monomer having two or more polymerizable reactive groups in the monomer. Examples of the polyfunctional monomer include divinyl compounds such as allyl methacrylate and divinylbenzene; di(meth)acrylic acid ester compounds such as diethylene glycol dimethacrylate, ethylene glycol dimethacrylate, diethylene glycol diacrylate, and 1,3-butylene glycol diacrylate; tri(meth)acrylic acid ester compounds such as trimethylolpropane trimethacrylate and trimethylolpropane triacrylate; and ethylenically unsaturated monomers containing epoxy groups such as allyl glycidyl ether and glycidyl methacrylate.

The resin particles 36 can be prepared, for example, by polymerizing a monomer composition containing the above-described monomer in an aqueous solvent such as water. The polymerization method is not particularly limited, and may be, for example, a suspension polymerization method, an emulsion polymerization aggregation method, a pulverization method, or the like. Further, as a polymerization reaction, any reaction such as radical polymerization or living radical polymerization can be used.

**In** the monomer composition used for preparing the resin particles 36, other compounding materials such as a chain transfer agent, a polymerization modifier, a polymerization reaction retarder, a reactive fluidizing agent, a filler, a flame retardant, an antiaging agent, and a colorant can be compounded in an arbitrary compounding amount.

Examples of the inorganic particles contained in the heat-resistant layer 34 include metal oxide particles, metal nitride particles, metal fluoride particles, and metal carbide particles.

Examples of the metal oxide particles include aluminum oxide, titanium oxide, magnesium oxide, zirconium oxide, nickel oxide, silicon oxide, and manganese oxide. Examples of the metal nitride particles include titanium nitride, boron nitride, aluminum nitride, magnesium nitride, and silicon nitride. Examples of the metal fluoride particles include aluminum fluoride, lithium fluoride, sodium fluoride, magnesium fluoride, calcium fluoride, and barium fluoride. Examples of the metal carbide particles include silicon carbide, boron carbide, titanium carbide, and tungsten carbide.

The inorganic particles may be porous aluminosilicates such as zeolite (M_{2/n}O·Al₂O₃·xSiO₂·yH₂O, M is a metal element, n is a valence of M, x ≥ 2, and y ≥ 0), layered silicates such as talc (Mg₃Si₄O₁₀(OH)₂), minerals such as barium titanate (BaTiO₃) and strontium titanate (SrTiO₃), and the like. Note that these may be used singly or in combination of two or more kinds thereof.

The heat-resistant layer 34 preferably further contains a binding material. The binding material has, for example, a function of bonding the inorganic particles to each other and the inorganic particles to the base material 30. Examples of the binding material include fluorine-based resins such as polyvinylidene fluoride (PVDF) and polytetrafluoroethylene (PTFE), polyimide-based resins, acryl-based resins, polyolefin-based resins, styrene-butadiene rubber (SBR), nitrile-butadiene rubber (NBR), carboxymethyl cellulose (CMC) or a salt thereof, and polyvinyl alcohol (PVA). One kind of them may be used alone, or two or more kinds of them may be used in combination. The content of the inorganic particles contained in the heat-resistant layer 34 is preferably, for example, greater than or equal to 400% by mass and less than or equal to 9900% by mass with respect to the mass of the binder. In addition, the content of the binding material contained in the heat-resistant layer 34 is preferably, for example, greater than or equal to 3% by mass and less than or equal to 30% by mass with respect to the total mass of the heat-resistant layer 34.

The heat-resistant layer 34 preferably contains a binding material and a polymer having an aramid bond. The polymer having the aramid bond has, for example, a function of improving the heat resistance of the heat-resistant layer 34. Examples of the polymer having the aramid bond include aromatic polyamides such as meta-oriented aromatic polyamide and para-oriented aromatic polyamide. The content of the inorganic particles contained in the heat-resistant layer 34 is, for example, preferably greater than or equal to 25% by mass and less than or equal to 900% by mass with respect to the total mass of the binding material and the polymer having the aramid bond. The content of the binding material contained in the heat-resistant layer 34 is preferably, for example, greater than or equal to 3% by mass and less than or equal to 30% by mass with respect to the total mass of the heat-resistant layer 34. The content of the heat-resistant polymer contained in the heat-resistant layer 34 is preferably, for example, greater than or equal to 10% by mass and less than or equal to 80% by mass with respect to the total mass of the heat-resistant layer 34.

An example of a method for producing the separator 13 of the present embodiment will be described. For example, the inorganic particles, the resin particles 36, water as a dispersion medium, and other components (for example, the binding material, the polymer having the aramid bond, and the like) used as necessary are mixed to prepare a functional layer slurry composition. Then, the functional layer slurry is applied onto the base material and then dried, so that the separator 13 of the present embodiment can be produced.

Another example of the separator 13 of the present embodiment includes a separator including a base material 30 having a first surface 30a and a second surface 30b, and a functional layer 32 disposed on the first surface 30a of the base material 30, in which the second surface 30b of the base material 30 has a ten-point average roughness (Rz) greater than or equal to 2.7 µm, or an outer surface of the functional layer 32 and the second surface 30b of the base material 30 have a ten-point average roughness (Rz) greater than or equal to 2.7 µm. The second surface 30b of the substrate 30 may be the first separator surface 13a facing the positive electrode 11 or the second separator surface 13b facing the negative electrode 12. However, when only the second surface 30b of the substrate 30 has a ten-point average roughness (Rz) greater than or equal to 2.7 µm out of the outer surface of the functional layer 32 and the second surface 30b of the substrate 30, the second surface 30b of the substrate 30 is preferably the first separator surface 13a facing the positive electrode 11.

In addition, the separator 13 of the present embodiment is not limited to the separator having the base material 30 and the functional layer 32 disposed on the base material 30, and may be formed only of the base material 30, for example. The functional layer 32 may not include the heat-resistant layer 34 containing the inorganic particles. The functional layer 32 includes, for example, a layer containing a known additive, and examples of the layer included in the functional layer other than the heat-resistant layer include an antistatic layer, an adhesive layer, a slipping layer, a leveling layer, a flame retardant layer, a layer that improves compatibility with an electrolytic solution, an antioxidant layer, and a softened layer.

In a case where the separator 13 is composed of only the base material 30, at least one of the first surface 30a and the second surface 30b of the base material 30 has a ten-point average roughness (Rz) greater than or equal to 2.7 µm. Examples of a method of roughening the surface of the base material 30 to adjust the ten-point average roughness (Rz) to a value greater than or equal to 2.7 µm include a method of mixing the resin particles 36 with a raw material of the base material 30 to form the base material 30, and a method of embedding the resin particles 36 in the produced base material 30. In this case, the average particle diameter (D50) of the resin particles 36 is desirably greater than the thickness of the base material.

Examples of the method for adjusting the ten-point average roughness (Rz) of the surface of the separator to a value greater than or equal to 2.7 µm include a method of rolling with a rolling roller having irregularities in addition to the use of the resin particles 36 described above. For example, after a layer such as the heat-resistant layer 34 is formed on the base material 30, the surface of the layer is rolled with a rolling roller having irregularities to adjust the ten-point average roughness (Rz) of the surface of the separator to a value greater than or equal to 2.7 µm.

### [Examples]

The present disclosure will be further described below with reference to Examples. However, the present disclosure is not limited to the following Examples.

### <Comparative Example 1>

### [Production of Positive Electrode]

A positive electrode mixture slurry was prepared by mixing 100 parts by mass of LiNi_{0.88}Co_{0.09}Al_{0.03}O₂, 1 part by mass of acetylene black (AB), and 0.9 parts by mass of polyvinylidene fluoride (PVDF) and adding an appropriate amount of N-methyl-2-pyrrolidone (NMP). Next, the positive electrode mixture slurry was applied to both surfaces of an aluminum foil (positive electrode current collector) having a 1% elongation proof stress of 53 MPa, and the applied film was dried. Then, the applied film was rolled using a roller and then cut into a predetermined electrode size to produce a positive electrode in which a positive electrode mixture layer was formed on both surfaces of the positive electrode current collector. An exposed portion where the positive electrode mixture layer was not formed and the positive electrode current collector was exposed was provided at a central portion of the positive electrode in the longitudinal direction, and a positive electrode lead made of aluminum was welded to the exposed portion.

### [Production of Negative Electrode]

A negative electrode mixture slurry was prepared by mixing 95 parts by mass of graphite powder, 5 parts by mass of Si oxide, 1 part by mass of carboxymethyl cellulose, and a dispersion of 1 part by mass of styrene-butadiene rubber (SBR) and adding an appropriate amount of water. Next, the negative electrode mixture slurry was applied to both surfaces of a copper foil (negative electrode current collector) having a 1% elongation proof stress of 85 MPa, and the applied film was dried. Then, the applied film was rolled using a roller and then cut into a predetermined electrode size to produce a negative electrode in which a negative electrode mixture layer was formed on both surfaces of the negative electrode current collector. An exposed portion where the negative electrode mixture layer was not formed and the negative electrode current collector was exposed was provided at one end portion (end portion located on the wound inner side of the electrode assembly) of the negative electrode in the longitudinal direction, and a negative electrode lead made of nickel was welded to the exposed portion.

### [Production of Separator]

A porous base material made of polyethylene and having a thickness of 12 µm was prepared. A functional layer slurry was prepared by mixing an α-Al₂O₃ powder (inorganic particles) and a binding material at a solid content mass ratio of 75:25 and then adding an appropriate amount of water. A separator in which a functional layer including a heat-resistant layer having an average thickness of 3 µm was formed on one surface of the base material was obtained by applying the functional layer slurry onto the entire area of one surface of the base material using a microgravure coater, and heating and drying the applied film in an oven at 50°C for 4 hours.

The ten-point average roughness (Rz) of the outer surface of the functional layer was measured and found to be 2.2 µm.

### [Production of Electrode Assembly]

A wound electrode assembly was produced by spirally winding the positive electrode and the negative electrode with the separator interposed between the positive electrode and the negative electrode. At this time, the separator was disposed such that the functional layer of the separator faced the positive electrode.

### [Production of Non-Aqueous Electrolyte]

A non-aqueous electrolyte was prepared by adding 5 parts by mass of vinylene carbonate (VC) to 100 parts by mass of a mixed solvent obtained by mixing ethylene carbonate (EC) and dimethyl carbonate (DMC) at a volume ratio of 3:7, and dissolving lithium hexafluorophosphate (LiPF₆) therein at a concentration of 1.5 mol/liter.

### [Preparation of Secondary Battery]

Insulating plates were respectively arranged on the upper and lower sides of the electrode assembly, and the electrode assembly was housed in an exterior can. The negative electrode lead was welded to a bottom of a bottomed cylindrical exterior can, and the positive electrode lead was welded to a sealing assembly. A secondary battery was produced by sealing the opening of the exterior can with the sealing assembly via a gasket after injecting a non-aqueous electrolyte into the exterior can, and then leaving the exterior can in a thermostatic chamber at 60°C for 15 hours.

### <Comparative Example 2>

A secondary battery was produced in the same manner as in Comparative Example 1 except that an α-Al₂O₃ powder, a binding material, and acrylic resin particles having an average particle diameter (D50) of 3.5 µm were mixed at a solid content mass ratio of 70.6:23.5:5.9 in the preparation of a functional layer slurry.

When a surface of a functional layer of a separator obtained in Comparative Example 2 was observed with a scanning electron microscope, a plurality of projections formed by some of the acrylic resin particles protruding from a heat-resistant layer were confirmed. In other Comparative Examples and Examples that are described below and in which acrylic resin particles are contained, a plurality of projections were similarly confirmed.

The difference between the average particle diameter (D50) of the acrylic resin particles and the average thickness (Db) of the heat-resistant layer was 0.5 µm. The ten-point average roughness (Rz) of the outer surface of the functional layer was measured and found to be 2.7 µm.

### <Comparative Example 3>

A secondary battery was produced in the same manner as in Comparative Example 1 except that an α-Al₂O₃ powder, a binding material, and acrylic resin particles having an average particle diameter (D50) of 4.0 µm were mixed at a solid content mass ratio of 70.0:23.3:6.7 in the preparation of a functional layer slurry.

The difference between the average particle diameter (D50) of the acrylic resin particles and the average thickness (Db) of a heat-resistant layer was 1 µm. The ten-point average roughness (Rz) of an outer surface of a functional layer was measured and found to be 3.4 µm.

### <Comparative Example 4>

A secondary battery was produced in the same manner as in Comparative Example 1 except that an α-Al₂O₃ powder, a binding material, and acrylic resin particles having an average particle diameter (D50) of 5.0 µm were mixed at a solid content mass ratio of 68.9:22.9:8.2 in the preparation of a functional layer slurry.

The difference between the average particle diameter (D50) of the acrylic resin particles and the average thickness (Db) of a heat-resistant layer was 2 µm. The ten-point average roughness (Rz) of an outer surface of a functional layer was measured and found to be 4.7 µm.

### [Charge-Discharge Cycle Test]

Under an environmental temperature of 25°C, the secondary battery of each Comparative Example was charged at a constant current of 0.2 It until a voltage reached 4.2 V, and then charged at 4.2 V until the current value reached 0.02 It. Thereafter, the battery was discharged at a constant current of 0.2 It until the voltage reached 3.0 V. The charge and discharge were defined as one cycle, and 300 cycles were performed. A capacity retention ratio in the charge-discharge cycle of the secondary battery was determined by the following formula. The capacity retention rate (%) = (the discharge capacity at the 300th cycle/the discharge capacity at the first cycle) × 100

The secondary battery after the charge cycle test was disassembled, the negative electrode and the positive electrode were taken out, and the length of each of the negative electrode and the positive electrode in the width direction after the test was measured. The elongation amount (AEE) of the negative electrode was obtained from the length of the negative electrode in the width direction before the test and the length of the negative electrode of the negative electrode after the test. In addition, the elongation amount (CEE) of the positive electrode was obtained from the length of the positive electrode in the width direction before the test and the length of the positive electrode in the width direction after the test. The smaller the sum (AEE + CEE) of these amounts is, the more the elongation of the current collectors is suppressed.

Table 1 summarizes the capacity retention rates and the values of AEE + CEE in Comparative Examples 1 to 4. However, the capacity retention rates and the values of AEE + CEE are the results of Comparative Example 1 as references (100) and relative values in Comparative Examples 2 to 4 to the results of Comparative Example 1.

**[Table 1]**

| | Positive electrode current collector 1% elongation proof stress (MPa) | Negative electrode current collector 1% elongation proof stress (MPa) | Separator | | Results | |
|---|---|---|---|---|---|---|
| | | | D50 - Db (µm) | Rz (µm) | CEE + AEE | Capacity retention rate |
| Comparative Example 1 | 53 | 85 | - | 2.2 | 100 | 100 |
| Comparative Example 2 | 53 | 85 | 0.5 | 2.7 | 100 | 100 |
| Comparative Example 3 | 53 | 85 | 1 | 3.4 | 100 | 101 |
| Comparative Example 4 | 53 | 85 | 2 | 4.7 | 100 | 101 |

As can be seen from the results in Table 1, in the case of using the positive electrode current collector and the negative electrode current collector each having a 1% elongation proof stress less than 190 MPa, the results of the capacity retention rates were not so different even when the separator with the separator surface (the outer surface of the functional layer) having a ten-point average roughness (Rz) less than 2.7 µm was used and even when the separator with the separator surface (the outer surface of the functional layer) having a ten-point average roughness (Rz) greater than or equal to 2.7 µm was used.

### <Comparative Example 5>

A secondary battery was produced in the same manner as in Comparative Example 1 except that an aluminum foil (positive electrode current collector) having a 1% elongation proof stress of 190 MPa was used, and the same test as in Comparative Example 1 was performed.

### <Example 1>

A secondary battery was produced in the same manner as in Comparative Example 2 except that an aluminum foil (positive electrode current collector) having a 1% elongation proof stress of 190 MPa was used, and the same test as in Comparative Example 2 was performed.

### <Example 2>

A secondary battery was produced in the same manner as in Comparative Example 3 except that an aluminum foil (positive electrode current collector) having a 1% elongation proof stress of 190 MPa was used, and the same test as in Comparative Example 3 was performed.

### <Example 3>

A secondary battery was produced in the same manner as in Comparative Example 4 except that an aluminum foil (positive electrode current collector) having a 1% elongation proof stress of 190 MPa was used, and the same test as in Comparative Example 4 was performed.

### <Example 4>

A secondary battery was produced in the same manner as in Comparative Example 1 except that an aluminum foil (positive electrode current collector) having a 1% elongation proof stress of 190 MPa was used, and in the preparation of a functional layer slurry, an α-Al₂O₃ powder, a binding material, and acrylic resin particles having an average particle diameter (D50) of 8.0 µm were mixed at a solid content mass ratio of 65.6:21.8:12.6, and the same test as in Comparative Example 1 was performed.

The difference between the average particle diameter (D50) of the acrylic resin particles and the average thickness (Db) of a heat-resistant layer was 5 µm. The ten-point average roughness (Rz) of an outer surface of a functional layer was measured and found to be 7.8 µm.

### <Example 5>

A secondary battery was produced in the same manner as in Comparative Example 1 except that an aluminum foil (positive electrode current collector) having a 1% elongation proof stress of 190 MPa was used, and in the preparation of a functional layer slurry, an α-Al₂O₃ powder, a binding material, and acrylic resin particles having an average particle diameter (D50) of 13.0 µm were mixed at a solid content mass ratio of 60.8:20.3:18.9, and the same test as in Comparative Example 1 was performed.

The difference between the average particle diameter (D50) of the acrylic resin particles and the average thickness (Db) of a heat-resistant layer was 10 µm. The ten-point average roughness (Rz) of an outer surface of a functional layer was measured and found to be 13.9 µm.

Table 2 summarizes the capacity retention rates and the values of AEE + CEE in Comparative Example 5 and Examples 1 to 5. However, the capacity retention rates and the values of AEE + CEE are relative values in Comparative Example 5 and Examples 1 to 5 to the results of Comparative Example 1 as the references (100).

**[Table 2]**

| | Positive electrode current collector 1% elongation proof stress (MPa) | Negative electrode current collector 1% elongation proof stress (MPa) | Separator | | Results | |
|---|---|---|---|---|---|---|
| | | | D50 - Db (µm) | Rz (µm) | CEE + AEE | Capacity retention rate |
| Comparative Example 5 | 190 | 85 | - | 2.2 | 70 | 86 |
| Example 1 | 190 | 85 | 0.5 | 2.7 | 70 | 93 |
| Example 2 | 190 | 85 | 1 | 3.4 | 70 | 99 |
| Example 3 | 190 | 85 | 2 | 4.7 | 70 | 100 |
| Example 4 | 190 | 85 | 5 | 7.8 | 70 | 100 |
| Example 5 | 190 | 85 | 10 | 13.9 | 70 | 100 |

In Comparative Example 5 and Examples 1 to 5 in which the positive electrode current collectors having a 1% elongation proof stress greater than or equal to 190 MPa were used, the elongation of the current collectors was suppressed as compared with Comparative Example 1. When a current collector having a high 1% elongation proof stress was used, there was a concern that charge-discharge cycle characteristics may be degraded. However, in all of Examples 1 to 5 in which the separators with surfaces (outer surfaces of the functional layers) having a ten-point average roughness (Rz) greater than or equal to 2.7 µm were used, the capacity retention rates were high and degradation of charge-discharge cycle characteristics was suppressed as compared with Comparative Example 5 in which the separator with a surface (outer surface of the functional layer) having a ten-point average roughness (Rz) less than 2.7 µm was used.

### <Comparative Example 6>

A secondary battery was produced in the same manner as in Comparative Example 1 except that a copper foil (negative electrode current collector) having a 1% elongation proof stress of 200 MPa was used, and the same test as in Comparative Example 1 was performed.

### <Example 6>

A secondary battery was produced in the same manner as in Comparative Example 2 except that a copper foil (negative electrode current collector) having a 1% elongation proof stress of 200 MPa was used, and the same test as in Comparative Example 2 was performed.

### <Example 7>

A secondary battery was produced in the same manner as in Comparative Example 3 except that a copper foil (negative electrode current collector) having a 1% elongation proof stress of 200 MPa was used, and the same test as in Comparative Example 3 was performed.

### <Example 8>

A secondary battery was produced in the same manner as in Comparative Example 4 except that a copper foil (negative electrode current collector) having a 1% elongation proof stress of 200 MPa was used, and the same test as in Comparative Example 4 was performed.

### <Example 9>

A secondary battery was produced in the same manner as in Comparative Example 1 except that a copper foil (negative electrode current collector) having a 1% elongation proof stress of 200 MPa was used, and in the preparation of a functional layer slurry, mixing was performed under the same conditions as in Example 4, and the same test as in Comparative Example 1 was performed.

### <Example 10>

A secondary battery was produced in the same manner as in Comparative Example 1 except that a copper foil (negative electrode current collector) having a 1% elongation proof stress of 200 MPa was used, and in the preparation of a functional layer slurry, mixing was performed under the same conditions as in Example 5, and the same test as in Comparative Example 1 was performed.

Table 3 summarizes the capacity retention rates and the values of AEE + CEE in Comparative Example 6 and Examples 6 to 10. However, the capacity retention rates and the values of AEE + CEE are relative values in Comparative Example 6 and Examples 6 to 10 to the results of Comparative Example 1 as the references (100).

**[Table 3]**

| | Positive electrode current collector 1% elongation proof stress (MPa) | Negative electrode current collector 1% elongation proof stress (MPa) | Separator | | Results | |
|---|---|---|---|---|---|---|
| | | | D50 - Db (µm) | Rz (µm) | CEE + AEE | Capacity retention rate |
| Comparative Example 6 | 53 | 200 | - | 2.2 | 55 | 88 |
| Example 6 | 53 | 200 | 0.5 | 2.7 | 55 | 93 |
| Example 7 | 53 | 200 | 1 | 3.4 | 55 | 97 |
| Example 8 | 53 | 200 | 2 | 4.7 | 55 | 100 |
| Example 9 | 53 | 200 | 5 | 7.8 | 55 | 100 |
| Example 10 | 53 | 200 | 10 | 13.9 | 55 | 100 |

In Comparative Example 6 and Examples 6 to 10 in which the negative electrode current collectors having a 1% elongation proof stress greater than or equal to 190 MPa were used, the elongation of the current collectors was suppressed as compared with Comparative Example 1. As described above, when a current collector having a high 1% elongation proof stress was used, there was a concern that charge-discharge cycle characteristics may be degraded. However, in all of Examples 6 to 10 in which the separators with surfaces (outer surfaces of the functional layers) having a ten-point average roughness (Rz) greater than or equal to 2.7 µm were used, the capacity retention rates were high and degradation of the charge-discharge cycle characteristics was suppressed as compared with Comparative Example 6 in which the separator with a surface (outer surface of the functional layer) having a ten-point average roughness (Rz) less than 2.7 µm was used.

### <Comparative Example 7>

A secondary battery was produced in the same manner as in Comparative Example 1 except that an aluminum foil (positive electrode current collector) having a 1% elongation proof stress of 190 MPa and a copper foil (negative electrode current collector) having a 1% elongation proof stress of 200 MPa were used, and the same test as in Comparative Example 1 was performed.

### <Example 11>

A secondary battery was produced in the same manner as in Comparative Example 2 except that an aluminum foil (positive electrode current collector) having a 1% elongation proof stress of 190 MPa and a copper foil (negative electrode current collector) having a 1% elongation proof stress of 200 MPa were used, and the same test as in Comparative Example 2 was performed.

### <Example 12>

A secondary battery was produced in the same manner as in Comparative Example 3 except that an aluminum foil (positive electrode current collector) having a 1% elongation proof stress of 190 MPa and a copper foil (negative electrode current collector) having a 1% elongation proof stress of 200 MPa were used, and the same test as in Comparative Example 3 was performed.

### <Example 13>

A secondary battery was produced in the same manner as in Comparative Example 4 except that an aluminum foil (positive electrode current collector) having a 1% elongation proof stress of 190 MPa and a copper foil (negative electrode current collector) having a 1% elongation proof stress of 200 MPa were used, and the same test as in Comparative Example 4 was performed.

### <Example 14>

A secondary battery was produced in the same manner as in Comparative Example 1 except that an aluminum foil (positive electrode current collector) having a 1% elongation proof stress of 190 MPa and a copper foil (negative electrode current collector) having a 1% elongation proof stress of 200 MPa were used, and in the preparation of a functional layer slurry, mixing was performed under the same conditions as in Example 4, and the same test as in Comparative Example 1 was performed.

### <Example 15>

A secondary battery was produced in the same manner as in Comparative Example 1 except that an aluminum foil (positive electrode current collector) having a 1% elongation proof stress of 190 MPa and a copper foil (negative electrode current collector) having a 1% elongation proof stress of 200 MPa were used, and in the preparation of a functional layer slurry, mixing was performed under the same conditions as in Example 5, and the same test as in Comparative Example 1 was performed.

Table 4 summarizes the capacity retention rates and the values of AEE + CEE in Comparative Example 7 and Examples 11 to 15. However, the capacity retention rates and the values of AEE + CEE are relative values in Comparative Example 7 and Examples 11 to 15 to the results of Comparative Example 1 as the references (100).

**[Table 4]**

| | Positive electrode current collector 1% elongation proof stress (MPa) | Negative electrode current collector 1% elongation proof stress (MPa) | Separator | | Results | |
|---|---|---|---|---|---|---|
| | | | D50 - Db (µm) | Rz (µm) | CEE + AEE | Capacity retention rate |
| Comparative Example 7 | 190 | 200 | - | 2.2 | 30 | 74 |
| Example 11 | 190 | 200 | 0.5 | 2.7 | 30 | 89 |
| Example 12 | 190 | 200 | 1 | 3.4 | 30 | 94 |
| Example 13 | 190 | 200 | 2 | 4.7 | 30 | 97 |
| Example 14 | 190 | 200 | 5 | 7.8 | 30 | 100 |
| Example 15 | 190 | 200 | 10 | 13.9 | 30 | 100 |

In Comparative Example 7 and Examples 11 to 15 in which the positive electrode current collectors having a 1% elongation proof stress greater than or equal to 190 MPa and the negative electrode current collectors having a 1% elongation proof stress greater than or equal to 190 MPa were used, the elongation of the current collectors was suppressed as compared with Comparative Example 1. As described above, when a current collector having a high 1% elongation proof stress was used, there was a concern that charge-discharge cycle characteristics may be degraded. However, in all of Examples 11 to 15 in which the separators with surfaces (outer surfaces of the functional layers) having a ten-point average roughness (Rz) greater than or equal to 2.7 µm were used, the capacity retention rates were high and degradation of the charge-discharge cycle characteristics was suppressed as compared with Comparative Example 7 in which the separator with a surface (outer surface of the functional layer) having a ten-point average roughness (Rz) less than 2.7 µm was used.

### [Supplementary Notes]

(1) A secondary battery including an electrode assembly including a positive electrode, a negative electrode, and a separator provided between the positive electrode and the negative electrode, in which
   the positive electrode includes a positive electrode current collector and a positive electrode mixture layer disposed on the positive electrode current collector,
   the negative electrode includes a negative electrode current collector and a negative electrode mixture layer disposed on the negative electrode current collector,
   the negative electrode mixture layer contains a negative electrode active material containing a Si-containing material,
   at least one of the positive electrode current collector and the negative electrode current collector has a 1% elongation proof stress greater than or equal to 190 MPa,
   the separator has a first separator surface facing the positive electrode and a second separator surface facing the negative electrode, and
   at least one of the first separator surface and the second separator surface has a ten-point average roughness (Rz) greater than or equal to 2.7 µm.
(2) The secondary battery according to (1), in which the negative electrode current collector has a 1% elongation proof stress greater than or equal to 190 MPa.
(3) The secondary battery according to (1) or (2), in which the first separator surface facing the positive electrode has a ten-point average roughness (Rz) greater than or equal to 2.7 µm.
(4) The secondary battery according to any one of (1) to (3), in which
   the separator includes a base material having a first surface and a second surface opposite to the first surface, and a functional layer disposed on at least the first surface of the base material out of the first surface and the second surface, and
   an outer surface of the functional layer is the first separator surface facing the positive electrode or the second separator surface facing the negative electrode, and has a ten-point average roughness (Rz) greater than or equal to 2.7 µm.
(5) The secondary battery according to (4), in which the outer surface of the functional layer is the first separator surface facing the positive electrode.
(6) The secondary battery according to (4) or (5), in which
   the functional layer includes a heat-resistant layer containing inorganic particles, and resin particles dispersed in the heat-resistant layer, and
   some of the resin particles form projections protruding from a surface of the heat-resistant layer.
(7) The secondary battery according to (6), in which a difference between an average particle diameter (D50) of the resin particles and an average thickness of the heat-resistant layer is greater than or equal to 0.5 µm.
(8) The secondary battery according to (6) or (7), in which an area occupancy of the resin particles when the surface of the functional layer is viewed in plan view is greater than or equal to 2% and less than or equal to 30%.
(9) The secondary battery according to any one of (6) to (8), in which the heat-resistant layer contains a binding material, and a content of the inorganic particles is greater than or equal to 400% by mass and less than or equal to 9900% by mass with respect to a mass of the binding material.
(10) The secondary battery according to any one of (6) to (8), in which the heat-resistant layer contains a binding material and a polymer having an aramid bond, and a content of the inorganic particles is greater than or equal to 25% by mass and less than or equal to 900% by mass with respect to a total mass of the binding material and the polymer having the aramid bond.
(11) The secondary battery according to any one of (1) to (10), in which a content of the Si-containing material is greater than or equal to 3% by mass with respect to a total mass of the negative electrode active material.
(12) The secondary battery according to any one of (1) to (11), in which
   the separator includes a base material having a first surface and a second surface opposite to the first surface, and a functional layer disposed on the first surface of the base material, and
   the second surface of the base material is the first separator surface facing the positive electrode or the second separator surface facing the negative electrode, and has a ten-point average roughness (Rz) greater than or equal to 2.7 µm.

### REFERENCE SIGNS LIST

- 10: Secondary battery
- 11: Positive electrode
- 12: Negative electrode
- 13: Separator
- 13a: First separator surface
- 13b: Second separator surface
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket
- 30: Base material
- 30a: First surface
- 30b: Second surface
- 32: Functional layer
- 34: Heat-resistant layer
- 36: Resin particles
- 36a: Projections

## Claims

1. A secondary battery comprising an electrode assembly including a positive electrode, a negative electrode, and a separator provided between the positive electrode and the negative electrode, wherein
the positive electrode includes a positive electrode current collector and a positive electrode mixture layer disposed on the positive electrode current collector,
the negative electrode includes a negative electrode current collector and a negative electrode mixture layer disposed on the negative electrode current collector,
the negative electrode mixture layer contains a negative electrode active material containing a Si-containing material,
at least one of the positive electrode current collector and the negative electrode current collector has a 1% elongation proof stress greater than or equal to 190 MPa,
the separator has a first separator surface facing the positive electrode and a second separator surface facing the negative electrode, and
at least one of the first separator surface and the second separator surface has a ten-point average roughness (Rz) greater than or equal to 2.7 µm.

2. The secondary battery according to claim 1, wherein the negative electrode current collector has a 1% elongation proof stress greater than or equal to 190 MPa.

3. The secondary battery according to claim 1 or 2, wherein the first separator surface facing the positive electrode has a ten-point average roughness (Rz) greater than or equal to 2.7 µm.

4. The secondary battery according to claim 1 or 2, wherein
the separator includes a base material having a first surface and a second surface opposite to the first surface, and a functional layer disposed on at least the first surface of the base material out of the first surface and the second surface, and
an outer surface of the functional layer is the first separator surface facing the positive electrode or the second separator surface facing the negative electrode, and has a ten-point average roughness (Rz) greater than or equal to 2.7 µm.

5. The secondary battery according to claim 4, wherein the outer surface of the functional layer is the first separator surface facing the positive electrode.

6. The secondary battery according to claim 4, wherein
the functional layer includes a heat-resistant layer containing inorganic particles, and resin particles dispersed in the heat-resistant layer, and
some of the resin particles form projections protruding from a surface of the heat-resistant layer.

7. The secondary battery according to claim 6, wherein a difference between an average particle diameter (D50) of the resin particles and an average thickness of the heat-resistant layer is greater than or equal to 0.5 µm.

8. The secondary battery according to claim 6, wherein an area occupancy of the resin particles when the surface of the functional layer is viewed in plan view is greater than or equal to 2% and less than or equal to 30%.

9. The secondary battery according to claim 6, wherein the heat-resistant layer contains a binding material, and a content of the inorganic particles is greater than or equal to 400% by mass and less than or equal to 9900% by mass with respect to a mass of the binding material.

10. The secondary battery according to claim 6, wherein the heat-resistant layer contains a binding material and a polymer having an aramid bond, and a content of the inorganic particles is greater than or equal to 25% by mass and less than or equal to 900% by mass with respect to a total mass of the binding material and the polymer having the aramid bond.

11. The secondary battery according to claim 1 or 2, wherein a content of the Si-containing material is greater than or equal to 3% by mass with respect to a total mass of the negative electrode active material.

12. The secondary battery according to claim 1 or 2, wherein
the separator includes a base material having a first surface and a second surface opposite to the first surface, and a functional layer disposed on the first surface of the base material, and
the second surface of the base material is the first separator surface facing the positive electrode or the second separator surface facing the negative electrode, and has a ten-point average roughness (Rz) greater than or equal to 2.7 µm.
